# EUROPEAN PATENT APPLICATION

(11) **EP 2 592 368 A2**
(43) Date of publication of application: **15.05.2013**
(21) Application number: 12191452.7
(22) Date of filing: 06.11.2012
(51) Int. Cl.: F25B 13/00, F25B 40/00

(54) **High-pressure control mechanism for air-cooled heat pump**

(30) Priority: 11.11.2011 JP 2011247824
(71) Applicant: MITSUBISHI HEAVY INDUSTRIES, Ltd., TOKYO, Tokyo 108-8215 (JP)
(72) Inventor: MORI, Takachika, TOKYO, 108-8215 (JP); YAMAGUCHI, Toru, TOKYO, 108-8215 (JP); AKATSUKA, Kei, TOKYO, 108-8215 (JP); FUCHIMOTO, Takeshi, TOKYO, 108-8215 (JP)
(74) Representative: Intès, Didier Gérard André

(57) **Abstract**

Focusing attention on an air-cooled heat pump including a supercooling circuit, it is an object to provide a high-pressure control mechanism for air-cooled heat pumps that allows efficient high-pressure control with reduced cost by utilizing the supercooling circuit. In an air-cooled heat pump (1) including a supercooling circuit (19) through which a portion of a liquid refrigerant diverted from a liquid refrigerant piping line (11B) flows through an electronic expansion valve for supercooling (20) and a supercooling heat exchanger (18) into an intake pipe (11C) of a compressor (2), a high-pressure-control bypass circuit (21) is provided that has an end thereof connected to a discharge pipe (11A) of the compressor (2) and another end thereof connected to the supercooling circuit (19) via switching means (22, 23) and that allows a portion of a high-pressure refrigerant gas discharged from the compressor (2) to flow through the electronic expansion valve for supercooling (20) into the liquid refrigerant piping line (11B).

## Description

### Technical Field

The present invention relates to high-pressure control mechanisms for high-pressure control of air-cooled heat pumps during operation.

### {Background Art}

Air-cooled heat pumps adapted for cooling operation throughout the year may fail to create a high pressure when operated in an environment with a low outdoor temperature, as in winter. Air-cooled heat pumps may also fail to create a high pressure during heating operation at an excessive load. In particular, this tendency is noticeable upon startup; in this case, a sufficient pressure difference between the high and low pressures cannot be ensured. This may hinder normal refrigerant flow and consequently cause an abnormal decrease in low pressure, which activates a low-pressure protection device, thus making it difficult to continuously operate the heat pump.

Avoiding such an event for continued normal operation of the heat pump requires a mechanism for controlling the pressure at the high-pressure side. Generally, a mechanical high-pressure control valve called an HPR is often used, although it can only control the pressure within a certain range. Therefore, depending on the operating status, the high pressure may rise excessively, which may result in inefficient operation. Another problem is that HPRs are expensive and increase costs.

To solve such problems, a heat pump has been proposed that includes a bypass circuit connected between a discharge pipe of a compressor and an outlet pipe of a condenser with a three-way valve whose degree of opening can be controlled and that detects the outdoor temperature and the pressure of the refrigeration cycle and, if they are lower than set values, allows a high-pressure refrigerant gas discharged from the compressor to bypass the condenser through the bypass circuit, which allows high-pressure control without the use of an HPR (see, for example, PTL 1). This ensures a sufficient pressure difference between the high and low pressures and eliminates the problem that an abnormal decrease in the low pressure due to failure to create a high pressure activates a protection device and thus prevents continued operation.

### Citation List

### Patent Literature

PTL 1
Japanese Unexamined Patent Application, Publication No. HEI-7-305903

### Summary of Invention

### Technical Problem

The heat pump disclosed in PTL 1 above, however, requires a flow control valve, such as a three-way valve whose degree of opening can be controlled, as well as the bypass circuit to control the amount of high-pressure refrigerant gas bypassing the condenser through the bypass circuit. This approach allows efficient high-pressure control with improved controllability, although a flow control valve needs to be provided instead of an HPR, which is expensive; therefore, the cost advantage is limited. Accordingly, what is intended is to provide a high-pressure control mechanism for air-cooled heat pumps that allows high-pressure control without the addition of a flow control valve by effectively utilizing an existing valve having a flow control function in an air-cooled heat pump.

In view of the foregoing, and focusing attention on an air-cooled heat pump including a supercooling circuit, it is an object of the present invention to provide a high-pressure control mechanism for air-cooled heat pumps that allows efficient high-pressure control with reduced cost by utilizing the supercooling circuit.

### Solution to Problem

To solve the above problems, a high-pressure control mechanism for an air-cooled heat pump according to the present invention employs the following solutions.
Specifically, a high-pressure control mechanism for an air-cooled heat pump according to an aspect of the present invention is a high-pressure control mechanism for an air-cooled heat pump in which a compressor, an air heat exchanger at a heat source side, an expansion valve, and a heat exchanger at a utilization side form a refrigeration cycle, in which a supercooling heat exchanger is disposed in a liquid refrigerant piping line of the refrigeration cycle, and which includes a supercooling circuit through which a portion of a liquid refrigerant diverted from the liquid refrigerant piping line flows through an electronic expansion valve for supercooling and the supercooling heat exchanger into an intake pipe of the compressor. A high-pressure-control bypass circuit is provided that has an end thereof connected to a discharge pipe of the compressor and another end thereof connected to the supercooling circuit via switching means and that allows a portion of a high-pressure refrigerant gas discharged from the compressor to flow through the electronic expansion valve for supercooling into the liquid refrigerant piping line.

According to an aspect of the present invention, in an air-cooled heat pump including a supercooling circuit, a high-pressure-control bypass circuit is provided that has an end thereof connected to a discharge pipe of a compressor and another end thereof connected to the supercooling circuit via switching means and that allows a portion of a high-pressure refrigerant gas discharged from the compressor to flow through an electronic expansion valve for supercooling into a liquid refrigerant piping line. Thus, during cooling operation at low outdoor temperature or during heating operation at an excessive load, a portion of the high-pressure refrigerant gas discharged from the compressor is directed via the switching means through the bypass circuit into the supercooling circuit and flows through the electronic expansion valve for supercooling into the liquid refrigerant piping line, which reduces a decrease in the high pressure and avoids shutdown due to activation of a protection device, thus allowing the air-cooled heat pump to operate normally. It is therefore possible to perform high-pressure control in a bypass circuit scheme without the use of an HPR, which is expensive, and to control the amount of bypassing high-pressure refrigerant gas through shared use of the electronic expansion valve for supercooling, which is of a standard type, disposed in the supercooling circuit. This allows efficient high-pressure control with reduced cost without the addition of a dedicated flow control valve. Although the present invention loses the original function of the supercooling circuit, i.e., increasing cooling capacity by supercooling the liquid refrigerant, during high-pressure control, the loss of the supercooling function causes no problem because the heat pump operates at low outdoor temperature.

In the above high-pressure control mechanism for the air-cooled heat pump, the bypass circuit is connected to the supercooling circuit via the switching means at the intake pipe side of the supercooling heat exchanger.

According to an aspect of the present invention, the bypass circuit is connected to the supercooling circuit via the switching means at the intake pipe side of the supercooling heat exchanger. During high-pressure control, therefore, the bypassing high-pressure refrigerant gas flowing through the bypass circuit can be supplied to the supercooling heat exchanger, where the refrigerant gas is subjected to heat exchange with a condensed low-temperature high-pressure liquid refrigerant so that the temperature thereof drops, before the refrigerant gas flows into the liquid refrigerant piping line. Thus, in an air-cooled heat pump having, for example, a receiver equipped with a fusible plug in a liquid refrigerant piping line, a situation such as a thermal effect on the fusible plug can be avoided.

In addition, in one of the above high-pressure control mechanisms for the air-cooled heat pumps, the switching means is composed of a first electromagnetic valve disposed in the bypass circuit and a second electromagnetic valve disposed in the supercooling circuit at the intake pipe side of a position at which the bypass circuit is connected.

According to an aspect of the present invention, the switching means is composed of a first electromagnetic valve disposed in the bypass circuit and a second electromagnetic valve disposed in the supercooling circuit at the intake pipe side of a position at which the bypass circuit is connected. Thus, the switching means can be composed of two inexpensive valves that can be easily turned ON and OFF for switching. This minimizes a cost increase due to the installation of the bypass circuit and ensures the reliability of the function of switching between two circuits, i.e., the supercooling circuit and the bypass circuit.

### Advantageous Effects of Invention

According to the present invention, during cooling operation at low outdoor temperature or during heating operation at an excessive load, a portion of the high-pressure refrigerant gas discharged from the compressor is directed via the switching means through the bypass circuit into the supercooling circuit and flows through the electronic expansion valve for supercooling into the liquid refrigerant piping line, which reduces a decrease in the high pressure and avoids shutdown due to activation of a protection device, thus allowing the air-cooled heat pump to operate normally. It is therefore possible to perform high-pressure control in a bypass circuit scheme without the use of an HPR, which is expensive, and to control the amount of bypassing high-pressure refrigerant gas through shared use of the electronic expansion valve for supercooling, which is of standard type, disposed in the supercooling circuit. This allows efficient high-pressure control with reduced cost without the addition of a dedicated flow control valve.

### Brief Description of Drawings

Fig. 1

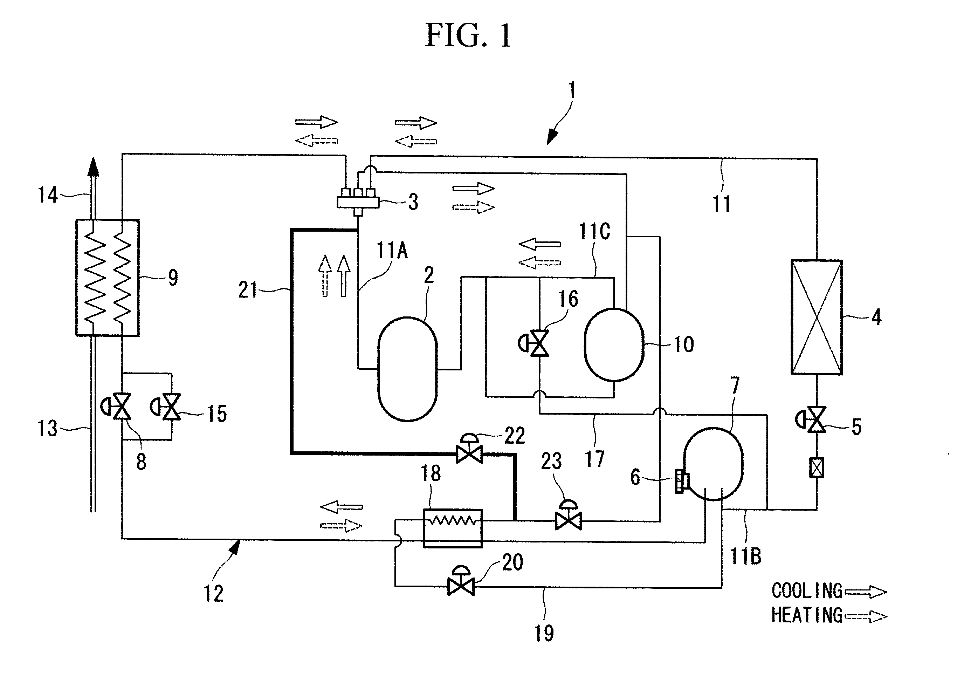

      Fig. 1 is a refrigeration cycle diagram of an air-cooled heat pump having a high-pressure control mechanism according to an embodiment of the present invention.

### Description of Embodiments

An embodiment of the present invention will be described below with reference to Fig. 1.
Fig. 1 shows a refrigeration cycle diagram of an air-cooled heat pump having a high-pressure control mechanism according to an embodiment of the present invention.
An air-cooled heat pump 1 includes a compressor 2, a four-way switching valve 3, an air heat exchanger 4 at the heat source side, an electronic expansion valve for heating (EEVH) 5, a receiver 7 equipped with a fusible plug 6, an electronic expansion valve for cooling (EEVC) 8, a refrigerant/water heat exchanger 9 at the utilization side, and an accumulator 10 that are connected together through refrigerant piping 11 to form a closed refrigeration cycle 12. The refrigeration cycle 12 itself is known.

A water inlet pipe 13 and a water outlet pipe 14 are connected to the water pipe side of the refrigerant/water heat exchanger 9, where water flowing through the water pipe side is subjected to heat exchange with refrigerant flowing through the refrigerant pipe side to provide cold water during cooling operation and hot water during heating operation. Also provided are an electromagnetic valve 15 that is connected in parallel with the electronic expansion valve for cooling (EEVC) 8 and that is open during heating operation, and a liquid refrigerant bypass circuit 17 that is disposed between a portion of a liquid refrigerant piping line 11B connecting the electronic expansion valve for heating (EEVH) 5 and the receiver 7 and an intake pipe 11C connecting the accumulator 10 and the compressor 2 and that includes a flow control valve 16.

A supercooling heat exchanger 18 is also provided in a portion of the liquid refrigerant piping line 11B connecting the receiver 7 and the electronic expansion valve for cooling (EEVC) 8 to cool the liquid refrigerant flowing through the liquid refrigerant piping line 11B, thus effecting supercooling. The supercooling heat exchanger 18 is composed of, for example, a double-pipe heat exchanger, with one passage thereof connected to the liquid refrigerant piping line 11B, and the other passage connected to a supercooling circuit 19 composed of a branch pipe branching from the liquid refrigerant piping line 11B.

An electronic expansion valve for supercooling (EEVSC) 20 is provided at the refrigerant inlet side of the supercooling heat exchanger 18 in the supercooling circuit 19 and is configured to control the amount of refrigerant diverted into the supercooling circuit 19 and to reduce the pressure of the refrigerant before it is supplied to the supercooling heat exchanger 18. The other end of the supercooling circuit 19 is connected to the inlet side of the accumulator 10, which is disposed in the intake pipe 11C of the compressor 2, at the outlet side of the supercooling heat exchanger 18.

The supercooling circuit 19 is also provided with a high-pressure-control bypass circuit 21 connecting a discharge pipe 11A of the compressor 2 and the outlet side of the supercooling heat exchanger 18, i.e., the intake pipe 11C side of the supercooling heat exchanger 18. The bypass circuit 21 is connected via a first electromagnetic valve 22 disposed in the bypass circuit 21 and a second electromagnetic valve 23 disposed in the supercooling circuit 19 at the intake pipe 11C side of the position at which the bypass circuit 21 is connected, the electromagnetic valves 22 and 23 constituting switching means. The supercooling circuit 19 is made to function by closing the first electromagnetic valve 22 and opening the second electromagnetic valve 23, whereas the high-pressure-control bypass circuit 21 is made to function by opening the first electromagnetic valve 22 and closing the second electromagnetic valve 23.

With the configuration described above, this embodiment provides the following advantageous effects.
In the above air-cooled heat pump 1, during cooling operation, the refrigerant is circulated by the four-way switching valve 3 in the direction indicated by the solid-line arrows, and during heating operation, the refrigerant is circulated by the four-way switching valve 3 in the direction indicated by the dashed-line arrows. Thus, during cooling operation, when the air heat exchanger 4 at the heat source side functions as a condenser and the refrigerant/water heat exchanger 9 at the utilization side functions as an evaporator, the water flowing into the water inlet pipe 13 and out of the water outlet pipe 14 can be cooled to produce cold water. During heating operation, when the refrigerant/water heat exchanger 9 at the utilization side functions as a condenser and the air heat exchanger 4 at the heat source side functions as an evaporator, the water flowing into the water inlet pipe 13 and out of the water outlet pipe 14 can be heated to produce hot water.

During this process, a portion of the high-pressure liquid refrigerant flowing through the liquid refrigerant piping line 11B is diverted into the supercooling circuit 19, is introduced into the supercooling heat exchanger 18 through the electronic expansion valve for supercooling (EEVSC) 20, where the pressure thereof drops, and is subjected to heat exchange with the liquid refrigerant flowing through the liquid refrigerant piping line 11B, and the resulting latent heat of vaporization can be used to cool the liquid refrigerant, thus effecting supercooling. The refrigerant evaporated by the supercooling heat exchanger 18 enters the intake pipe 11C at the inlet side of the accumulator 10 and is taken into the compressor 2. The foregoing cold water production, hot water production, and supercooling effect are known.

The above air-cooled heat pump 1 may fail to reach a high pressure during cooling operation at low outdoor temperature or during heating operation at an excessive load. This may activate a low-pressure protection device and prevent continued operation, as described above. In this case, the present embodiment closes the second electromagnetic valve 23 disposed in the supercooling circuit 19 and opens the first electromagnetic valve 22 disposed in the high-pressure-control bypass circuit 21 to disable the function of the supercooling circuit 19 and to enable the function of the high-pressure-control bypass circuit 21 so that the high-pressure refrigerant gas discharged from the compressor 2 can be introduced through the bypass circuit 21 into the supercooling circuit 19 at the outlet side of the supercooling heat exchanger 18 to enter the liquid refrigerant piping line 11B through the supercooling heat exchanger 18 and the electronic expansion valve for supercooling (EEVSC) 20.

The amount of bypassing high-pressure refrigerant gas can then be controlled by utilizing the flow rate control function of the electronic expansion valve for supercooling (EEVSC) 20 to maintain the high pressure in the liquid refrigerant piping line 11B at a predetermined pressure or higher. This ensures a sufficient pressure difference between the high and low pressures to allow the refrigerant to flow normally, which prevents an abnormal decrease in the low pressure and avoids shutdown due to activation of a protection device, thus allowing continued normal operation of the air-cooled heat pump 1.

Thus, this embodiment can perform high-pressure control in a bypass circuit scheme without the use of an HPR, which is expensive, and can also control the amount of bypassing high-pressure refrigerant gas through shared use of the electronic expansion valve for supercooling (EEVSC) 20, which is of a standard type, disposed in the supercooling circuit 19. This allows efficient high-pressure control with reduced cost without the addition of a dedicated flow control valve.
Although this embodiment loses the original function of the supercooling circuit 19, i.e., increasing cooling capacity by supercooling the liquid refrigerant, during high-pressure control, the loss of the supercooling function causes no problem because the heat pump 1 operates at low outdoor temperature.

In addition, the high-pressure-control bypass circuit 21 is connected to the supercooling circuit 19 at the outlet side, i.e., the intake pipe 11C side, of the supercooling heat exchanger 18 via the switching means, which is composed of the first electromagnetic valve 22 and the second electromagnetic valve 23. During high-pressure control, therefore, the bypassing high-pressure refrigerant gas flowing through the bypass circuit 21 can be supplied to the supercooling heat exchanger 18, where the refrigerant gas is subjected to heat exchange with the condensed low-temperature high-pressure liquid refrigerant so that the temperature thereof drops, before the refrigerant gas flows into the liquid refrigerant piping line 11B. Thus, in the air-cooled heat pump 1, which has the receiver 7 equipped with the fusible plug 6 in the liquid refrigerant piping line 11B, a situation such as a thermal effect on the fusible plug 6 can be avoided.

Furthermore, in this embodiment, the means for switching between the supercooling circuit 19 and the high-pressure-control bypass circuit 21 is composed of the first electromagnetic valve 22 disposed in the bypass circuit 21 and the second electromagnetic valve 23 disposed in the supercooling circuit 19 at the intake pipe 11C side of the position at which the bypass circuit 21 is connected. Thus, the switching means can be composed of the first and second electromagnetic valves 22 and 23, which are two inexpensive valves that can be easily turned ON and OFF for switching. This minimizes a cost increase due to the installation of the bypass circuit 21 and ensures the reliability of the function of switching between two circuits, i.e., the supercooling circuit 19 and the bypass circuit 21.

The present invention is not limited to the invention according to the above embodiment; modifications are possible without departing from the spirit thereof. For example, although the above embodiment connects the high-pressure-control bypass circuit 21 to the supercooling circuit 19 at the intake pipe 11C side of the supercooling heat exchanger 18, the connection position may be between the supercooling heat exchanger 18 and the electronic expansion valve for supercooling (EEVSC) 20 in the case of a circuit where no fusible plug 6 is provided in the liquid refrigerant piping line 11B.

In addition, although the above embodiment illustrates an example where the two electromagnetic valves 22 and 23 are used as the means for switching between the supercooling circuit 19 and the high-pressure-control bypass circuit 21, the two electromagnetic valves 22 and 23 may be replaced by a three-way switching valve. Furthermore, although the above embodiment illustrates an example where the invention is applied to the air-cooled heat pump 1, which includes the four-way switching valve 3 and the refrigeration cycle 12 capable of switching between a cooling cycle and a heating cycle, it should be understood that the invention is also applicable to an air-cooled heat pump dedicated to a cooling cycle.

### Reference Signs List

- 1: air-cooled heat pump
- 4: air heat exchanger at heat source side
- 5: electronic expansion valve for heating (EEVH)
- 8: electronic expansion valve for cooling (EEVC)
- 9: refrigerant/water heat exchanger at utilization side
- 11: refrigerant piping
- 11A: discharge pipe
- 11B: liquid refrigerant piping line
- 11C: intake pipe
- 12: refrigeration cycle
- 18: supercooling heat exchanger
- 19: supercooling circuit
- 20: electronic expansion valve for supercooling (EEVSC)
- 21: high-pressure-control bypass circuit
- 22: first electromagnetic valve (switching means)
- 23: second electromagnetic valve (switching means)

## Claims

1. A high-pressure control mechanism for an air-cooled heat pump (1) **characterized in that** in said mechanism a compressor (2), an air heat exchanger (4) at a heat source side, an expansion valve (5,8), and a heat exchanger (9) at a utilization side form a refrigeration cycle (12), in which a supercooling heat exchanger (18) is disposed in a liquid refrigerant piping line (11B) of the refrigeration cycle (12), and which includes a supercooling circuit (19) through which a portion of a liquid refrigerant diverted from the liquid refrigerant piping line (11B) flows through an electronic expansion valve for supercooling (20) and the supercooling heat exchanger (18) into an intake pipe (11C) of the compressor (2),
wherein a high-pressure-control bypass circuit (21) is provided, the high-pressure-control bypass circuit (21) having an end thereof connected to a discharge pipe (11A) of the compressor (2) and another end thereof connected to the supercooling circuit (19) via switching means (22,23), the high-pressure-control bypass circuit (21) allowing a portion of a high-pressure refrigerant gas discharged from the compressor (2) to flow through the electronic expansion valve for supercooling (20) into the liquid refrigerant piping line (11B).

2. The high-pressure control mechanism for the air-cooled heat pump (1) according to Claim 1, wherein the bypass circuit (21) is connected to the supercooling circuit (19) via the switching means (22,23) at the intake pipe (11C) side of the supercooling heat exchanger (18).

3. The high-pressure control mechanism for the air-cooled heat pump (1) according to Claim 1 or 2, wherein the switching means (22,23) comprises a first electromagnetic valve (22) disposed in the bypass circuit (21) and a second electromagnetic valve (23) disposed in the supercooling circuit (19) at the intake pipe (11C) side of a position at which the bypass circuit (21) is connected.
